# EUROPÄISCHE PATENTSCHRIFT

(11) **EP 3 183 282 B1**
(45) Veröffentlichungstag und Bekanntmachung des Hinweises auf die Patenterteilung: **15.08.2018**
(21) Anmeldenummer: 15756586.2
(22) Anmeldetag: 17.08.2015
(51) Int. Cl.: C08G 18/62, C08G 18/65, C08G 18/76, C08G 18/79, C08G 18/32, C08G 18/42

(54) **POLYESTERMODIFIZIERTE POLYBUTADIENOLE ZUR HERSTELLUNG VON POLYURETHAN-ELASTOMEREN UND THERMOPLASTISCHEN POLYURETHANEN**
POLYESTER MODIFIED POLYBUTADIENOLS FOR THE PRODUCTION OF POLYURETHANE ELASTOMERS AND THERMOPLASTIC POLYURETHANES
POLYBUTADIENOLE MODIFIÉ PAR POLYESTER DESTINÉ À FABRIQUER UN ÉLASTOMÈRE DE POLYURÉTHANE ET POLYURÉTHANE THERMOPLASTIQUE

(30) Priorität: 18.08.2014 EP 14181297
(43) Veröffentlichungstag der Anmeldung: 28.06.2017
(73) Patentinhaber: BASF SE, 67056 Ludwigshafen am Rhein (DE)
(72) Erfinder: ELING, Berend, 49448 Lemförde (DE); DILCHER, Jan, 84453 Mühldorf (DE); FINK, Irina, 22081 Hamburg (DE); LUINSTRA, Gerrit, 22523 Hamburg (DE)
(74) Vertreter: BASF IP Association
(86) Internationale Anmeldenummer: PCT/EP2015/068837
(87) Internationale Veröffentlichungsnummer: WO 2016/026807

(56) Entgegenhaltungen:
- WO-A1-2013/180006

## Beschreibung

Die Erfindung betrifft die Verwendung von Blockcopolymeren aus Polybutadienol und einem cyclischen Ester, beispielsweise ε-Caprolacton zur Herstellung von Polyurethanen, die Polyurethane selbst sowie eine die Blockcopolymere enthaltende Polyolkomponente.

Flüssige hydroxylterminierte Polybutadiene (HTPB) sind seit langer Zeit bekannt und finden als Polyolkomponenten Verwendung bei der Herstellung von Polyurethanen. Kommerziell erhältliche hydroxylterminierte Polybutadiene werden durch radikalische Polymerisation von 1,3-Butadien, wie in US 3965140 beschrieben, oder ionische Polymerisation von 1,3-Butadien, wie in DD 160223 beschrieben, erhalten. Bei der Herstellung von HTPB kommt den Start- und Abbruchreagenzien eine besondere Bedeutung zu. Abhängig vom Herstellungsprozess werden Polyole mit unterschiedlichen Anzahlen an funktionellen Gruppen pro Makromolekül erhalten. Diese hydroxylterminierte Polybutadiene können als Polyolkomponente zur Herstellung von Polyurethan-Elastomeren eingesetzt werden. Für die Herstellung von Polyurethan-Elastomeren ist dabei neben der Polyolkomponente die Zugabe eines niedermolekularen Diols, des sogenannten Kettenverlängerers, oder eines niedermolekularen Triols, des sogenannten Vernetzers, typisch. Polyurethan-Elastomere aus HTPB und verschiedenen Kettenverlängerern sind in verschiedenen Publikationen beschrieben worden, unter anderem in J. App. Pol. Sci. 1971, 15, 2941-2956; Pol. Eng. Sci. 1981, 21, 668-674; J.App.Pol.Sci, 2002, 85, 84-91. Eine breite Verwendung von HTPB blieb wegen der schwierigen Verarbeitung jedoch aus. Die Hauptschwierigkeiten liegen in der schlechten Mischbarkeit dieser Polyole mit Isocyanaten und typischen Kettenverlängerern wie 1,4-Butandiol begründet. Das Resultat dieser Unverträglichkeiten sind unzureichende mechanische Eigenschaften der hergestellten Polyurethan-Elastomere. So wird zum Beispiel in einem technischen Bulletin von Cray Valley (Exton, PA, USA), 4880 - 01/10, "Novel Polybutadiene Diols for Thermoplastic Polyurethanes" beschrieben, dass es nicht möglich sei, ein thermoplastisches Polyurethan (TPU) aus Krasol LBH-Typen, 1,4-Butandiol und 4,4'-MDI herzustellen. Als Grund hierfür wird die schlechte Verträglichkeit der Rohstoffe angegeben. Diese schlechte Verträglichkeit sei dafür verantwortlich, dass kein ausreichender Molekulargewichtsaufbau möglich sei. Das Problem wurde in diesem Fall dadurch gelöst, dass besser verträgliche, aber atypischen Kettenverlänger für TPU, wie zum Beispiel 2-Ethyl-1,3-hexandiol, verwendet wurden.

EP 1 710 263 B1 offenbart ein Polyurethangummi, erhältlich durch Umsetzung von
(a) Isocyanatprepolymeren, erhältlich durch Umsetzung von
   (a-1) Isocyanaten mit
   (a-2) Polydienol, mit
(b) Verbindungen mit gegenüber Isocyanaten reaktiven Gruppen,
wobei der Anteil an Polydienol, welcher bei der Umsetzung der Komponenten (a) und (b) zugegeben wird, mehr als 15 Gew.-%, bezogen auf das Gesamtgewicht der Komponenten (a) und (b), beträgt. Das Polydienol (a-2) weist endständige OH-Gruppen, eine OH-Funktionalität von 2,0 bis 2,6 und ein zahlenmittleres Molekulargewicht von 1000 g/mol bis 5000 g/mol auf. Bevorzugt enthält die Komponente (b) ein Polyetherpolyol (b-1), das durch Alkoxylierung eines di-, tri- oder tetrafunktionellen Startermoleküls erhältlich ist, ein Polytetrahydrofuran (b-2), ein Polyesterpolyol (b-3), ein Polybutadienol (b-4) sowie ein Kettenverlängerungsmittel (b-5). Offenbart wird auch die Verwendung des Polyurethangummis als 2-Komponenten-Klebstoff.

Die ringöffnende Polymerisation von Caprolacton (CL) ist bekannt. Die Verwendung von HTPB als Initiator zur Herstellung von Blockcopolymeren wird beispielsweise in Macromolecules, 2006, 39, 711-719 und e-Polymers, 2009, No. 032 beschrieben. Auf diese Weise erhaltene Polyolkomponenten mit der Struktur CL-block-HTPB-block-CL werden bislang nicht in typischen Polyurethananwendungen eingesetzt. Eine in EP 0 266 697 beschriebene Anwendung betrifft die Verwendung als Bindemittel für Raketentreibstoffe.

JP 6002341 A beschreibt die ringöffnende Polymerisation von Lactonen unter Verwendung von Polybutadienpolyolen als Initiatoren. In einem Beispiel wird Polybutadienpolyol mit ε-Caprolactam in Gegenwart von Ti(BuO)₄ als Katalysator umgesetzt. Erwähnt wird die Verwendung der Lacton-Polymere zur Herstellung von Polyurethan-Elastomeren, Schäumen, Klebstoffen und Beschichtungen.

Aufgabe der Erfindung ist es, eine mit anderen Komponenten gut verträgliche Polyolkomponente auf Basis von Polybutadienolen zur Herstellung von Polyurethan-Elastomeren und thermoplastischen Polyurethanen bereitzustellen. Aufgabe der Erfindung ist es weiterhin, Polyurethan-Elastomere und thermoplastischen Polyurethane mit sehr guten mechanischen Eigenschaften bereitzustellen.

Gelöst wird die Aufgabe durch Polyurethane, erhältlich durch Umsetzung von
a) Polyisocyanaten A, ausgewählt aus gegebenenfalls modifiziertem 4,4'-Methandiphenyldiisocyanat, höherkernigen Homologen des 4,4'-Methandiphenyldiisocyanats, Isocyanatgruppen enthaltenden Prepolymeren auf Basis von 4,4'-Methandiphenyldiisocyanat und Gemischen daraus,
b) Verbindungen mit mindestens zwei mit Isocyanatgruppen reaktiven Wasserstoffatomen, enthaltend
   b1) Blockcopolymere aus einem Polybutadienol und einem cyclischen Ester als Polyolkomponente B1, und
   b2) Diole als niedermolekulare Kettenverlängerer und optional Triole als Vernetzer mit einem Molekulargewicht von 62 bis 500 g/mol als Komponente B2,
c) gegebenenfalls weiteren polymere Verbindungen C mit mindestens 2 gegenüber Iso-cyanaten reaktiven Wasserstoffatomen,
d) gegebenenfalls Katalysatoren D,
e) gegebenenfalls Wasser E,
f) gegebenenfalls physikalischen Treibmitteln F,
g) gegebenenfalls weiteren Hilfsmitteln und/oder Zusatzstoffen G.

Die erfindungsgemäßen Polyurethane können Polyurethan-Elastomere (PU-Elastomere) oder thermoplastische Elastomere (TPU) sein, wobei die Polyurethan-Elastomere auch Schäume sein können.

Erfindungsgemäße Polyurethan-Elastomere werden mindestens aus einem Polyol, einem Kettenverlängerer und einem Polyisocyanat hergestellt, wobei das Polyol ein Blockcopolymer aus einem Polybutadienol und einem cyclischen Ester ist. Bevorzugte cyclische Ester sind ε-Caprolacton, 1,6-Dioxacyclododecan-7,12-dion (CAS777-95-7) und Oxacyclodecan-2-on (CAS 947-05-7).

In einer besonders bevorzugten Ausführungsform ist der cyclische Ester ε-Caprolacton (CL). Die Polyolkomponente B1 ist somit ein Blockcopolymer aus einem Polybutadienol und ε-Caprolacton mit der Struktur (CL-block-HTPB-block-CL). Polyurethan-Elastomere auf Basis von CL-block-HTPB-block-CL-Polyolen weisen bessere mechanische Eigenschaften auf als Polyurethan-Elastomeren auf Basis von nicht polyestermodifiziertem hydroxylterminiertem Polybutadien. Die Polyurethane auf Basis des mit ε-Caprolacton polyestermodifizierten HTPB sind zudem sehr hydrophob und zeigen trotz des Esteranteils sehr gute Wasserquellwerte.

Für die Herstellung von thermoplastischen Elastomeren sind polyestermodifizierte Polybutadienole erforderlich, die difunktionell sind. Geeignete polyestermodifizierte Polybutadienole B2 zur Herstellung von TPU sind solche auf Basis von hydroxylterminierten Polybutadienen (HTPB), welche durch anionische Polymerisation ausgehend von einem difunktionellen Starter, beispielsweise 1,4-Dilithiumbutan, hergestellt wurden. Die Herstellung von hydroxylterminierten Polybutadienen ist beispielsweise in DD 154609 und DD 159775 beschrieben.

Zur Herstellung von Polyurethan-Elastomeren können auch polyestermodifizierte Polybutadienole verwendet werden, die eine gewisse Verzweigung aufweisen. Geeignete Polybutadienole werden durch kontrollierte radikalische Polymerisation oder durch anionische Polymerisation hergestellt oder sind hydroxylmodifizierte Polybutadiene, die ausgehend von flüssigen Polybutadienen hergestellt werden, beispielsweise ausgehend von Produkten, die unter dem Handelsnamen Lithene®, Firma Synthomer, Essex, UK erhältlich sind.

Hydroxylmodifizierte Polybutadiene können aus nicht funktionalisierten Polybutadien-Oligomeren mit im Allgemeinen einem zahlenmittleren Molekulargewicht von 500 bis 10 000 g/mol, bevorzugt 750 bis 7 500 g/mol, besonders bevorzugt 1000 bis 5000 g/mol und insbesondere 1000 bis 2000 g/mol hergestellt werden. Eine Möglichkeit ist eine Teilepoxidierung vorhandener Doppelbindungen und die anschließende Öffnung dieser Epoxide durch geeignete Nucleophile. Die Epoxidierung von Polydienen ist beispielsweise beschrieben in Perera, Ind. Eng. Chem. Res. 1988, 27, 2196-2203. Durch Umsetzung von Polybutadienen mit Percarbonsäuren können epoxidierte Produkte erhalten werden. Dabei kann die Percarbonsäure direkt eingesetzt werden oder in situ aus der Carbonsäure und Wasserstoffperoxid generiert werden. Beispielsweise kann zur Epoxidierung Ameisensäure als einfachste Carbonsäure eingesetzt werden.

Epoxidierte Polybutadiene können durch geeignete Nucleophile wie Wasser, Alkohole oder Amine zu hydroxylfunktionalisierten Polybutadienen umgesetzt werden. Bevorzugt sind Alkohole wie Ethanol und Butanol. Geeignete Katalysatoren für diese Reaktion sind starke Säuren wie Mineralsäuren, beispielsweise beschrieben in EP 0585265 B1, Bortrifluorid, beispielsweise beschrieben in US 5,242,989 oder Trifluormethansulfonsäure, beispielsweise beschrieben in WO 96/20234 sowie Li, J. Macromol. Sci, Part A, 2013, 50, 297-301.

Im Gegensatz zu den durch anionische oder radikalische Polymerisation hergestellten HTPB weisen die post-funktionalisierten Polybutadienole Hydroxylgruppen nicht selektiv als Endgruppen auf, sondern statistisch verteilt über das Rückgrat des Polybutadiens.

Die durch anionische oder radikalische Polymerisation hergestellten HTPB oder die durch Epoxidierung erhaltenen post-funktionalisierten Polybutadienole werden anschließen durch ringöffnende Co-Polymerisation mit einem cyclischen Ester, beispielsweise ε-Caprolacton, in Gegenwart eines Katalysators polyestermodifiziert. Als Katalysatoren kommen Titan-Katalysatoren wie Titantetrabutoxid zum Einsatz, wie in JP-A 60023418 beschrieben.

Als Kettenverlängerer oder Vernetzer B2 können Substanzen mit einem Molekulargewicht von 62 bis 500 g/mol, besonders bevorzugt von 62 bis 400 g/mol eingesetzt werden, wobei Kettenverlängerer 2 gegenüber Isocyanaten reaktive Wasserstoffatome und Vernetzer 3 gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 500, besonders bevorzugt von 62 bis 400 und insbesondere von 62 bis 350 eingesetzt. In Betracht kommen beispielsweise aliphatische, cycloaliphatische und/oder araliphatische oder aromatische Diamine und Diole mit 2 bis 14, vorzugsweise 2 bis 10 Kohlenstoffatomen, wie Ethylenglykol, 1,2-Propandiol, 2-Methyl-1,3-propandiol, 1,3-propandiol, 1,4-Butandiol, 1,6-Hexandiol, 1,10-Decandiol und Bis-(2-hydroxyethyl)-hydrochinon, 1,2-, 1,3-, 1,4-Dihydroxycyclohexan, Bisphenol-A-bis(hydroxyethylether), Diethylenglykol, Dipropylenglykol, Tripropylenglykol, Triole, wie 1,2,4-, 1,3,5-Trihydroxycyclohexan, Glycerin und Trimethylolpropan, Diethanolamine, Triethanolamine, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Vernetzer B2 niedermolekulare hydroxylgruppenhaltige Polyalkylenoxide auf Basis von Ethylen- und/oder 1,2-Propylenoxid, besonders bevorzugt von Ethylenoxid, und trifunktionellen Startern, insbesondere Glycerin und Trimethylolpropan, eingesetzt. Besonders bevorzugte Kettenverlängerer B2 sind Ethylenglykol, 1,2-Propandiol, 1,3-propandiol, 2-Methyl-1,3-Propandiol, 1,4-Butadiol, Diethylenglykol und Dipropylenglykol.

Zur Herstellung der erfindungsgemäßen Polyurethanreaktionsmischung werden die organischen Polyisocyanate A und die Komponenten, die Verbindungen mit gegenüber Isocyanaten reaktiven Wasserstoffatomen enthalten, in solchen Mengen zur Umsetzung gebracht, dass das Äquivalenzverhältnis von NCO-Gruppen zur Summe der reaktiven Wasserstoffatome 0,5 : 1 bis 3,5 : 1 (entsprechend einem Isocyanatindex von 50 bis 350), vorzugsweise 0,85 : 1 bis 1,30 : 1 und besonders bevorzugt von 0,9 : 1 bis 1,15 : 1 beträgt.

Die zur Herstellung der erfindungsgemäßen Polyurethanformkörper verwendeten gegebenenfalls modifizierten Polyisocyanate A umfassen 4,4'-Methandiphenyldiisocyanat, Mischungen aus monomeren 4,4'-Methandiphenyldiisocyanat und höherkernigen Homologen des 4,4'-Methandiphenyldiisocyanats (Polymer-MDI). Die Isocyanate können auch modifiziert sein, beispielsweise durch Einbau von Uretdion-, Carbamat-, Isocyanurat-, Carbodiimid-, Allophanat- und insbesondere Urethangruppen. Dabei kann die Isocyanatkomponente A auch in Form von Isocyanatgruppenhaltigen Isocyanatprepolymeren eingesetzt werden. Diese Polyisocyanatprepolymere sind erhältlich, indem vorstehend beschriebene Polyisocyanate als Komponente A1 beispielsweise bei Temperaturen von 30 bis 100°C, bevorzugt bei etwa 80°C, mit Polyolen A2 zum Prepolymer umgesetzt werden.

Isocyanatgruppen enthaltende Prepolymere auf Basis von 4,4'-MDI werden durch Umsetzung von gegebenenfalls modifiziertem 4,4'-MDI und/oder dessen höherkernigen Homologen mit Polyolen erhalten. Vorzugsweise wird zur Herstellung der Prepolymere 4,4'-MDI mit uretoniminmodifiziertem MDI und handelsüblichen Polyolen auf Basis von Polyestern, beispielsweise ausgehend von Adipinsäure, oder Polyethern, beispielsweise ausgehend von Ethylenoxid und/oder Propylenoxid, umgesetzt.

Polyole A2 sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole A2 Polyetherole eingesetzt. Gegebenenfalls werden den genannten Polyolen A2 bei der Herstellung der Isocyanatprepolymere übliche Kettenverlängerer oder Vernetzungsmittel als Komponente A3 zugegeben. Solche Kettenverlängerer sind die im Folgenden unter B2 beschriebenen Stoffe. Besonders bevorzugt werden als Kettenverlängerer 1,4-Butandiol, 1,2-Propylenglykol, 1,3-Butandiol, Dipropylenglykol, Tripropylenglykol und/oder Propylenglykole mit einem Molekulargewicht bis zu 500 eingesetzt. Vorzugsweise wird dabei das Verhältnis von organischen Polyisocyanaten A1 zu Polyolen A2 und Kettenverlängerern A3 so gewählt, dass das Isocyanatprepolymer einen NCO-Gehalt von 10 bis 28 %, besonders bevorzugt von 14 bis 25 % aufweist.

Zur Herstellung von Polyurethan-Elastomeren geeignete Blockcopolymere B1 aus einem Polybutadienol und einem cyclischen Ester, bevorzugt ε-Caprolacton, weisen im Allgemeinen ein zahlenmittleres Molekulargewicht im Bereich von 600 bis 15000 g/mol, bevorzugt 750 bis 10 000 g/mol und besonders bevorzugt 1000 bis 7 500 g/mol auf. Ihr Anteil beträgt im Falle von ε-Caprolacton im Allgemeinen 5 bis 75 Gew.-%, bevorzugt 7 bis 60 Gew.-%, besonders bevorzugt 10 bis 50 Gew.-%. Ihre OH-Funktionalität beträgt im Allgemeinen 2 bis 5, bevorzugt 2 bis 3,5, besonders bevorzugt 2 bis 3. Sie weisen im Allgemeinen sowohl endständige als auch kettenständige OH-Gruppen auf.

Zur Herstellung von thermoplastischen Polyurethanen geeignete Blockcopolymere B1 aus einem Polybutadienol und einem cyclischen Ester, bevorzugt ε-Caprolacton, weisen im Allgemeinen ein zahlenmittleres Molekulargewicht im Bereich von 600 bis 15000 g/mol, bevorzugt 750 bis 10 000 g/mol und besonders bevorzugt 1000 bis 7 500 g/mol auf. Ihr Anteil an ε-Caprolacton beträgt im Allgemeinen 5 bis 75 Gew.-%, bevorzugt 7 bis 60 Gew.-%, besonders bevorzugt 10 bis 50 Gew.-%. Ihre OH-Funktionalität beträgt im Allgemeinen 1,5 bis 2,2, bevorzugt 1,8 bis 2,2 besonders bevorzugt 1,9 bis 2,1. Sie weisen im Wesentlichen nur endständige OH-Gruppen auf.

Im Allgemeinen sind die erfindungsgemäßen Polyurethane erhältlich durch Umsetzung von
a) 10 bis 300 Gew.-Teilen, bevorzugt 30 bis 150 Gew.-Teilen Polyisocyanate A,
   b1) 100 Gew.-Teilen der Polyolkomponente B1,
   b2) 2 bis 20 Gew.-Teilen, bevorzugt 4 bis 15 Gew.-Teilen niedermolekulare Kettenverlängerer oder Vernetzer mit einem Molekulargewicht von 62 bis 500 g/mol als Komponente B2,
c) 0 bis 100 Gew.-Teilen weitere polymere Verbindungen C mit mindestens 2 gegenüber Iso-cyanaten reaktiven Wasserstoffatomen,
d) 0 bis 5 Gew.-Teilen Katalysatoren D,
e) 0 bis 3 Gew.-Teilen Wasser E,
f) 0 bis 10 Gew.-Teilen physikalische Treibmittel F,
g) 0 bis 100 Gew.-Teilen Hilfsmittel und/oder Zusatzstoffe G.

In einer Ausführungsform der vorliegenden Erfindung handelt es sich bei den Polyurethanen um nicht-geschäumte Polyurethan-Elastomere. Diese sind erhältlich durch Umsetzung der Komponenten A, B1, B2, gegebenenfalls C, gegebenenfalls D und gegebenenfalls G in den oben angegebenen Mengen, wobei in Abwesenheit von Treibmitteln E und F gearbeitet wird.

In einer weiteren Ausführungsform der vorliegenden Erfindung handelt es sich bei den Polyurethanen um Schäume. Diese sind erhältlich durch Umsetzung der Komponenten A, B1, B2, gegebenenfalls C, gegebenenfalls D und gegebenenfalls G, wobei in Anwesenheit von Wasser E als Treibmittel und/oder eines physikalischen Treibmittels F gearbeitet wird. Im Allgemeinen wird in Gegenwart von 0,1 bis 10 Gew.-Teilen, bevorzugt 0,2 bis 5 Gew.-Teile des physikalischen Treibmittels und/oder in Gegenwart von 0,05 bis 3,0 Gew.-Teilen Wasser, bevorzugt 0,1 bis 1,0 Gew.-Teile gearbeitet.

Gegenstand der vorliegenden Erfindung ist auch eine Polyolkomponente enthaltend
b1) 100 Gew.-Teile Blockcopolymere bestehend aus einem Polybutadienol und einem cyclischen Ester, bevorzugt ε-Caprolacton, als Komponente B1 und
b2) 2 bis 20 Gew.-Teile, bevorzugt 4 bis 10 Gew.-Teile niedermolekulare Kettenverlängerer oder Vernetzer mit einem Molekulargewicht von 62 bis 500 g/mol als Komponente B2.

In einer bevorzugten Ausführungsform enthält die Komponente B2 als niedermolekularen Kettenverlängerer Ethylenglykol, 1,2-Propandiol, 1,3-Propandiol, 2-Methyl-1,3-propandiol, 1,4-Butadiol, Diethylenglykol und Dipropylenglykol. In einer besonders bevorzugten Ausführungsform besteht die Komponente B2 aus 1,4-Butandiol.

In einer weiteren bevorzugten Ausführungsform ist der Vernetzer der Komponente B2 ausgewählt aus der Gruppe bestehend aus ethoxyliertem und/oder propoxyliertem Glycerin und Trimethylolproan.

Gegenstand der vorliegenden Erfindung ist auch die Verwendung einer Polyolkomponente enthaltend Blockcopolymere aus einem Polybutadienol und einem cyclischen Ester, bevorzugt ε-Caprolacton, und einem niedermolekularen Kettenverlängerer oder Vernetzer mit einem Molekulargewicht von 62 bis 500 g/mol, zur Herstellung von Polyurethan-Elastomeren oder thermoplastischen Polyurethanen.

Geeignete weitere polymere Verbindungen C mit mindestens zwei gegenüber Isocyanaten reaktiven Wasserstoffatomen weisen ein Molekulargewicht von mindestens 500 g/mol auf. Dabei können alle zur Polyurethanherstellung bekannten Verbindungen mit mindestens zwei reaktiven Wasserstoffatomen und einem Molekulargewicht von mindestens 500 g/mol eingesetzt werden. Diese weisen beispielsweise eine Funktionalität von 2 bis 8 und ein Molekulargewicht von 500 bis 12 000 g/mol auf. So können beispielsweise Polyetherpolyamine und/oder Polyole, ausgewählt aus der Gruppe der Polyetherpolyole, Polyesterpolyole oder Mischungen daraus, verwendet werden.

Die bevorzugt zur Anwendung kommenden weiteren Polyole C sind Polyetherole, Polycarbonatpolyole und/oder Polyesterole mit Molekulargewichten von 500 bis 12000 g/mol, bevorzugt von 500 bis 6000 g/mol, insbesondere von 500 bis 3000 g/mol, und bevorzugt einer mittleren Funktionalität von 2 bis 6, besonders bevorzugt 2 bis 4. Vorzugsweise werden als weitere Polyole C ausschließlich Polyetherole und/oder Polyesterpolyole eingesetzt.

Die Polyetherole C werden nach bekannten Verfahren hergestellt. Beispielsweise können sie durch anionische Polymerisation von Alkylenoxiden mit 2 bis 4 C-Atomen mit Alkalihydroxiden, wie z.B. Natrium- oder Kaliumhydroxid oder Alkalialkoholaten, wie z.B. Natriummethylat, Natrium- oder Kaliumethylat oder Kaliumisopropylat als Katalysatoren und unter Zusatz mindestens eines Startermoleküls, das 2 bis 8, vorzugsweise 2 bis 6 reaktive Wasserstoffatome aufweist, oder durch kationische Polymerisation mit Lewissäuren, wie Antimonpentachlorid, Borfluorid-Etherat u.a., oder Bleicherde als Katalysatoren hergestellt werden. Ebenso können Polyetherpolyole durch Doppelmetallcyanidkatalyse aus einem oder mehreren Alkylenoxiden mit 2 bis 4 Kohlenstoffatomen hergestellt werden. Auch tertiäre Amine können als Katalysator eingesetzt werden, beispielsweise Triethylamin, Tributylamin, Trimethylamin, Dimethylethanolamin, Imidazol oder Dimethylcyclohexylamin. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin (TDA) und 4,4'-, 2,4'- und 2,2'-Diaminodiphenylmethan (MDA) und polymeres MDA. Als Startermoleküle kommen ferner in Betracht: Alkanolamine, wie z. B. Ethanolamin, N-Methyl- und N-Ethylethanolamin, Dialkanolamine, wie z. B. Diethanolamin, N-Methyl- und N-Ethyldiethanolamin, Trialkanolamine, wie z. B. Triethanolamin, und Ammoniak. Vorzugsweise verwendet werden mehrwertige Alkohole, wie Ethandiol, 1,2- und 2,3-Propandiol, Diethylenglykol, Dipropylenglykol, 1,4-Butandiol, 1,6-Hexandiol, Glycerin, Trimethylolpropan; Pentaerythrit, Sorbitol und Saccharose, und Mischungen davon. Die Polyetherpolyole können einzeln oder in Form von Mischungen verwendet werden.

Als weitere Polyesterole C können in der Polyurethanchemie üblicherweise verwendete Polyesterole eingesetzt werden. Polyesterole C können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. Caprolacton, oder Hydroxycarbonsäuren, z.B. Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 : 1 bis 1,8, vorzugsweise 1 : 1,05 bis 1,2 polykondensiert.

Die erhaltenen Polyesterpolyole besitzen vorzugsweise eine Funktionalität von 2 bis 4, insbesondere von 2 bis 3, und ein zahlenmittleres Molekulargewicht von 480 bis 3000, vorzugsweise 1000 bis 3000 g/mol.

Als Katalysatoren D zur Herstellung der Polyurethane werden bevorzugt Verbindungen verwendet, welche die Reaktion der Hydroxylgruppen enthaltenden Verbindungen der Komponente B und gegebenenfalls C mit den organischen, gegebenenfalls modifizierten Polyisocyanaten A stark beschleunigen. Genannt seien beispielsweise Amidine, wie 2,3-Dimethyl-3,4,5,6-tetra-hydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethylhexandiamin, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan und Alkanolaminverbindungen, wie Triethanolamin, Triisopropanolamin, N-Methyl- und N-Ethyl-di ethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinnmaleat und Dioctylzinndiacetat, sowie Bismutcarboxylate, wie Bismut(III)-neodecanoat, Bismut-2-ethylhexanoat und Bismutoctanoat oder Mischungen davon. Die organischen Metallverbindungen können allein oder vorzugsweise in Kombination mit stark basischen Aminen eingesetzt werden.

Vorzugsweise verwendet werden 0,001 bis 5 Gew.-%, insbesondere 0,05 bis 2 Gew.-% Katalysator bzw. Katalysatorkombination, bezogen auf das Gesamtgewicht der Komponenten B und gegebenenfalls C.

Die Polyurethan-Elastomere können nicht-geschäumte, feste Materialien mit einer Dichte von im Allgemeinen größer als 1000 kg/m³ oder Schäume sein. Als Treibmittel zur Herstellung von Schäumen wird vorzugsweise Wasser (Komponente E) eingesetzt, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt unter 100°C.

Die physikalischen Treibmittel F werden zumeist ausgewählt aus der Gruppe bestehend aus Alkanen und/oder Cycloalkanen mit mindestens 4 Kohlenstoffatome, Dialkylethern, Estern, Alkoholen, Ketonen, Acetalen, Fluoralkanen mit 1 bis 8 Kohlenstoffatomen und Tetraalkylsilanen.

Als Beispiele seien genannt: Propan, n-Butan, iso- und Cyclobutan , n-, iso- und Cyclopentan, Cyclohexan, Dimethylether, Methylethylether, Methylbutylether, Ameisensäuremethylester, tert-Butanol, Aceton sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2,3-Pentafluorpropen, 1-Chlor-3,3,3-trifluor-propen, 1,1,1,2-Tetrafluorethan, Difluorethan und 1,1,1,2,3,3,3-Heptafluorpropan sowie Perfluoralkane, wie, C₃F₈, C₄F₁₀, C₅F₁₂, C₆F₁₄, und C₇F₁₇. Besonders bevorzugt sind Kohlenwasserstoffe, vorzugsweise Pentane, insbesondere Cyclopentan. Die genannten physikalischen Treibmittel können allein oder in beliebigen Kombinationen untereinander eingesetzt werden.

Wenn Wasser als einziges Treibmittel eingesetzt wird, dann beträgt die Menge Wasser bevorzugt 0,05 bis 3 Gew.-Teile, bezogen auf die Polyolkomponenten B und gegebenenfalls C. Wird ein physikalisches Treibmittel eingesetzt, so beträgt dessen Menge bevorzugt 0,1 bis 10 Gew.-Teile, bezogen auf die Polyolkomponenten B und gegebenenfalls C.

Die Schäume werden in der Regel in einer Form hergestellt. Die Dichte der Schäume beträgt im Allgemeinen von 100 bis 1000 kg/m³. Solche Schäume werden manchmal in der Fachliteratur als mikrozelluläre Schaumstoffe bezeichnet.

Der Reaktionsmischung zur Herstellung der Polyurethanschäume können gegebenenfalls auch noch Hilfsmittel und/oder Zusatzstoffe E zugegeben werden. Genannt seien als Hilfsmittel und/oder Zusatzstoffe E beispielsweise oberflächenaktive Substanzen, Schaumstabilisatoren, Zellregler, weitere Trennmittel, Füllstoffe, Farbstoffe, Pigmente, Hydrolyseschutzmittel, flammhemmende Mittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxythylierte Alkylphenole, oxythylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente B und gegebenenfalls C, eingesetzt.

Als geeignete weitere Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart. Vorzugsweise enthalten erfindungsgemäße Reaktionsmischungen keine weiteren Trennmittel.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat. Auch können anorganische Fasern zugesetzt werde, zum Beispiel Glasfasern. Als organische Füllstoffe kommen beispielsweise in Betracht: Ruß, Melamin, Kollophonium, Cyclopentadienylharze und Pfropfpolymerisate sowie Cellulosefasern, Polyamid-, Polyacryl nitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten A bis D, zugegeben.

Die so hergestellten Polyurethane können in vielfältiger Weise eingesetzt werden. Die Hauptanwendungsgebiete sind in "The Polyurethanes Book", Randall und Lee (Herausgeber), Wiley, 2010, ISBN 978-0-470-85041-1, Kapitel 19 bis 22 beschrieben.

Thermoplastische Urethane sind schmelzbare Polyurethane, die in konventionellen thermoplastischen Verarbeitungsprozessen wie Extrusion, Kalandern und Spritzguss zum Beispiel für Folien, Schläuche, Kabelummantelung und hochwertige Bauteile für die Fahrzeugindustrie verarbeitet werden.

Mikrozelluläre Polyurethan-Elastomere finden zum Beispiel Anwendung in Schuhen und in Zusatzfedern und Integralschäumen für die Automobilindustrie.

Polyurethan-Gießelastomere werden zum Beispiel zur Herstellung von Rollen, Sieben, Filtern, Industrie- und Sportböden verwendet.

RIM-Elastomere werden zum Beispiel in Scheibenummantelungen und zur Herstellung von Autobauteilen, wie Stoßstangen und Spoiler eingesetzt.

Aus Polyurethan-Elastomeren können elastomere Beschichtungen hergestellt werden.

Aus Polyurethan-Elastomeren können elastomere Fasern hergestellt werden.

Aus Polyurethan-Elastomeren können Klebstoffe hergestellt werden.

Die Erfindung wird durch die nachstehenden Beispiele näher erläutert.

### Beispiele

Die Tabelle 1 zeigt eine Übersicht über mögliche Polyole basierend auf Polybutadien. Polyol 4 ist ein post-funktionalisiertes Polybutadien. Zudem ist in Tabelle 1 ein reiner Polycaprolacton-Polyester (Capa® 2200, Perstorp Holding, Perstorp, Schweden) als Polyol 5 aufgeführt.

### Beispiel 1: Herstellung von Polyol 4

In einem konischen 10 L-Stahlreaktor wurden 680 g Lithene® PM4 (Fa. Synthomer, Essex, UK) in 3850 g Toluol gelöst und auf 60°C geheizt. Nach Zugabe von 59,5 g 98 gew.-%iger Ameisensäure wurde mit 400 rpm innig gemischt. Über 7,5 Stunden wurden kontinuierlich 40 mL/h Wasserstoffperoxid zugegeben. Anschließend wurde das Reaktionsgemisch zweimal mit gesättigter Natriumhydrogencarbonat-Lösung und einmal mit gesättigter Natriumchlorid-Lösung gewaschen. Die organische Phase wurde mit Natriumsulfat getrocknet und das Lösungsmittel unter reduziertem Druck bei 60°C entfernt.

Umsatz an Doppelbindungen: 6,9%; Epoxy-Wert nach Jung und Kleeberg: 0,104 mol Epoxy/100 g Polymer; Farbe: blass gelb; Viskosität: 0,687 Pa•s (40°C).

In einem 6 L-Glasreaktor wurden 520 g des epoxidierten Lithene® PM4 in 2080 g 1-Propanol dispergiert und auf 65°C erwärmt. Nach Zugabe von 1,56 mL einer 10 gew.-%igen Lösung von Trifluormethansulfonsäure in 1-Propanol (100 ppm) wurde 6 Stunden lang gerührt. Die Mischung wurde mit Natriumhydrogencarbonat neutralisiert und diese nach dem Abkühlen der Mischung filtriert. Von dem Filtrat wurde unter reduziertem Druck bei bis zu 95°C das Propanol entfernt.
OH-Zahl: 52,11; Farbe: blass gelb; Viskosität: 1,09 Pa•s (40°C)
Weitere verwendete Polyole sind in Tabelle 1 beschrieben.

**Tabelle 1: hydroxylfunktionalisierte Polybutadiene**

| Bezeichnung | Polyol 1 | Polyol 2 | Polyol 3 | Polyol 4 | Polyol 5 |
|---|---|---|---|---|---|
| Polybutadienol | Krasol® LBH P2000 | Krasol® LBH P3000 | PolyBD R45 HTLO | Hydroxyliertes Lithene® PM4 | (Capa® 2200) |
| Molmasse Mn (nach Angabe des Herstellers) | 1978 | 2975 | 2800 | 2600 | 2000 |
| Funktionalität (nach Angabe des Herstellers) | >1,9 | >1,9 | 2,4-2,6 | 2,4 | 2 |
| ε-Caprolacton [Gew.-%] | 0 | 0 | 0 | 0 | 100 |
| OH-Zahl | 53,82 | 34,98 | 52,49 | 52,11 | 54-58 |
| η [Pa • s] (bei Temperatur) | 2,75 (40°C) | 4,62 (40°C) | 1,31 (60°C) | 1,09 (40°C) | 0,48 (60°C) |
| Tm [°C] | amorph | amorph | amorph | amorph | 40-50 |

Krasol® und PolyBD Polyole werden hergestellt von Cray Valley, einem Tochterunternehmen von Total, Frankreich.

Herstellung von polyestermodifizierten Polyolkomponenten
ε-Caprolacton wurde über CaH₂ getrocknet und anschließend bei 130°C unter reduziertem Druck destilliert, bei -30°C unter Argon gelagert und binnen 14 Tagen verwendet. Titantetrabutoxid wurde zu 50 Vol.-% in trockenem Toluol gelöst und die Lösung unter Argon gelagert.

### Beispiel 2: Herstellung der Polyole 6 bis 10

Das eingesetzte Polybutadien wurde vor der Verwendung bei 95°C für 20 Stunden im Vakuum getrocknet und unter Argon gelagert. Ein 250 mL-Glasreaktor wurde mit 164 g Polyol 1 (157 mmol OH-Gruppen) und 36 g ε-Caprolacton (315 mmol) befüllt und mit Argon gespült. Die Komponenten wurden homogen verrührt, auf 120°C erwärmt und es wurden schließlich 43 µL Titantetrabutoxid-Lösung (15 ppm Titan) zugegeben, bevor der Reaktor verschlossen wurde. Nach 2-stündigem Rühren bei 120°C wurde das Produkt abgelassen.

Analog zur Herstellung von Polyol 6 wurden die Polyole 7 bis 10 aus Tabelle 2a hergestellt. Die abweichenden Einwaagen und zugehörige Produkteigenschaften sind in Tabelle 2a zusammengefasst.

**Tabelle 2a: Herstellung der estermodifizierten Polyolkomponenten**

| Bezeichnung | Polyol 6 | Polyol 7 | Polyol 8 | Polyol 9 | Polyol 10 |
|---|---|---|---|---|---|
| Polybutadienol | Polyol 1 | Polyol 1 | Polyol 2 | Polyol 2 | Polyol 4 |
| Monomer/OH | 2 | 5 | 2 | 5 | 2,4 |
| Anteil ε-Caprolacton [Gew.-%] | 18 | 35 | 13 | 26 | 20 |
| Polybutadien [g] | 164,1 | 129,2 | 175,1 | 147,5 | 175,9 |
| ε-Caprolacton [g] | 35,9 | 70,8 | 24,9 | 52,5 | 132,0 |
| Ti [ppm] | 15 | 30 | 11 | 22 | 150 |
| Reaktionstemperatur [°C] | 120 | 120 | 120 | 120 | 150 |
| Reaktionszeit [h] | 2 | 2 | 2 | 2 | 8 |
| OH-Zahl | 44,84 | 35,41 | 33,26 | 28,38 | 40,77 |
| η [Pa •·s] bei 40 °C | 2,33 | 2,62 | 4,4 | 4,97 | 1,03 |
| Tm [°C] | amorph | amorph | amorph | 22,7 | 48,3 |

### Beispiel 3: Herstellung der Polyole 11 bis 13

In einem 5 L-Stahlreaktor wurden 1367,4 g Polyol 3 (1,28 mol OH-Gruppen) 3 Stunden lang bei 100°C im Vakuum getrocknet und unter Stickstoff 462,7 g ε-Caprolacton (4,06 mol) zugegeben. Bei 250 rpm und 150°C wurden die Komponenten homogen verrührt, bevor 0,40 ml Titantetrabutoxid-Lösung (15 ppm Titan) zugeben und der Reaktor verschlossen wurde. Nach 4-stündigem Rühren bei 150°C wurde das Produkt abgelassen.

Analog zur Herstellung von Polyol 11 wurden die Polyole 12 und 13 aus Tabelle 2b hergestellt. Die abweichenden Einwaagen und zugehörige Produkteigenschaften sind in Tabelle 2b zusammengefasst.

**Tabelle 2b: Herstellung der estermodifizierten Polyolkomponenten**

| Bezeichnung | Polyol 11 | Polyol 12 | Polyol 13 |
|---|---|---|---|
| Polybutadienol | Polyol 3 | Polyol 3 | Polyol 1 |
| Monomer/OH | 1,6 | 3,20 | 4 |
| Anteil ε-Caprolacton [wt%] | 15 | 25 | 30 |
| Polybutadien [g] | 1700 | 1367,4 | 2454,6 |
| ε-Caprolacton [g] | 287,5 | 462,7 | 1058,2 |
| Ti [ppm] | 15 | 15 | 3 |
| Reaktionstemperatur [°C] | 150 | 150 | 120 |
| Reaktionszeit [h] | 4 | 4 | 4 |
| OHv | 41 | 38 | 34 |
| Visco [Pa •·s] bei 60°C | 1,54 | 1,87 | 10,94 |
| Tm [°C] | amorph | 14,9 | amorph |

### Herstellung von Polyurethan-Elastomeren

Für die Verarbeitung zu Polyurethanen wurden die Polyolkomponente und die Isocyanate auf 45°C bzw. 60°C temperiert. Die Temperatur richtete sich nach der Schmelztemperatur der Polyolkomponente. Die Polyolkomponente enthielt neben dem Polybutadienpolyol 1,4-Butandiol als Kettenverlängerer, Quecksilber-Salz als Katalysator und einen Entschäumer (Antifoam MSA, von der Firma Dow Corning). Als B-Komponente wurde ein Gemisch aus gleichen Teilen von einem handelsüblichen, 4,4'- MDI basierten Prepolymer mit einem NCO-Wert von 23 % (MP102 der Firma BASF) und einem handelsüblichen Uretonimin-modifizierten 4,4'-MDI (MM103 der Firma BASF) verwendet. In allen Rezepturen der Polyurethan-Elastomere wurde ein NCO-Index von 100 eingestellt. Pro Mischvorgang wurden die Komponenten in einem Speedmixer der Fa. Hausschild eine Minute lang bei 2000 rpm gemischt.

### Beispiel 4: Herstellung der Elastomere 1 bis 11

Für die Herstellung von Elastomer 2 wurden in einem Becher für die Polyolkomponente 90,07 g Polyol 6 (95,2 % der Polyolkomponente) zusammen mit 3,79 g 1,4-Butandiol (4,0 % der Polyolkomponente), 0,47 g Katalysator (0,5 % der Polyolkomponente) und 0,28 g Entschäumer (0,3 % der Polyolkomponente) eingewogen und 30 Minuten lang bei 45°C (Verarbeitungstemperatur) temperiert. Diese Komponente wurde im Speedmixer 2 Minuten lang blasenfrei vermischt. Anschließend wurde die Isocyanatkomponente zugegeben und eine Minute im Speedmixer vermischt. Das Gemisch wurde in eine auf 80°C temperierte Form von 150 x 200 x 2 mm³ ausgegossen und mit einem Kunststoffstab glatt gestrichen. Nach 30 Minuten wurde das Gießelastomer entformt und für 4 Stunden bei 80°C getempert. Das Polyurethan-Elastomer wurde vor der Charakterisierung mindestens 7 Tage bei 23°C und 50 % Luftfeuchtigkeit gelagert. Analog zu Elastomer 2 wurden die Elastomere 1 und 3 bis 11 hergestellt. Abweichende Einwaagen und zugehörige Produkteigenschaften der erhaltenen Elastomere auf Basis anderer HTPB-Polyole sind in Tabelle 3a und 3b abhängig von der Verarbeitungstemperatur zusammengefasst.

**Tabelle 3a: Herstellung der Polyurethan-Elastomere aus unmodifizierten Polyolen bei einer Verarbeitungstemperatur von 45°C**

| Bezeichnung | Elastomer 1 | Elastomer 2 | Elastomer 3 | Elastomer 4 | Elastomer 5 | Elastomer 6 |
|---|---|---|---|---|---|---|
| Polybutadien-Typ | Polyol 1 | Polyol 6 | Polyol 7 | Polyol 2 | Polyol 8 | Polyol 9 |
| ε-Caprolacton im Polyol [Gew.-%] | | 18 | 35 | | 13 | 26 |
| Polyol [%] | 95,2 | 95,2 | 95,2 | 95,2 | 95,2 | 95,2 |
| Butandiol [%] | 4 | 4 | 4 | 4 | 4 | 4 |
| Entschäumer [%] | 0,3 | 0,3 | 0,3 | 0,3 | 0,3 | 0,3 |
| Katalysator [%] | 0,5 | 0,5 | 0,5 | 0,5 | 0,5 | 0,5 |
| Shore A | 58 | 70 | 69 | 61 | 70 | 69 |
| Reissdehnung [%] | 409 | 550 | 641 | 322 | 379 | 497 |
| Zugfestigkeit [MPa] | 11,1 | 25,0 | 23,6 | 6,31 | 14,2 | 16,2 |
| Quellgrad [%] | 0,29 | 0,35 | 0,42 | 0,26 | 0,27 | 0,30 |

**Tabelle 3b: Herstellung der Polyurethan-Elastomere aus estermodifizierten Polyolen bei einer Verarbeitungstemperatur von 60°C**

| Bezeichnung | Elastomer 7 | Elastomer 8 | Elastomer 9 | Elastomer 10 | Elastomer 11 |
|---|---|---|---|---|---|
| Polyol | Polyol 3 | Polyol 11 | Polyol12 | Polyol 4 | Polyol 10 |
| ε-Caprolacton im Polyol [Gew.-%] | | 15 | 25 | | 20 |
| Polyol [%] | 93,6 | 93,6 | 93,6 | 95,6 | 95,6 |
| Butandiol [%] | 6 | 6 | 6 | 4 | 4 |
| Entschäumer [%] | 0,3 | 0,3 | 0,3 | 0,3 | 0,3 |
| Katalysator [%] | 0,1 | 0,1 | 0,1 | 0,1 | 0,1 |
| Shore A | 72 | 71 | 78 | 42 | 39 |
| Reissdehnung [%] | 95,6 | 232,6 | 257,9 | 81 | 104 |
| Zugfestigkeit [MPa] | 4,057 | 11,32 | 11,62 | 1,5 | 2,5 |
| Quellgrad [%] | 0,46 | 0,41 | 0,39 | 0,64 | 0,4 |

### Vergleichsbespiel 1: Herstellung von Elastomer 12

Entsprechend dem Beispiel 4 wurde zum Vergleich ein Polyurethan-Elastomer aus einem reinen Polycaprolacton-Polyol hergestellt (Polyol 5 aus Tabelle 1). Tabelle 4 fasst Rezeptur und mechanische Eigenschaften des Elastomers zusammen.

**Tabelle 4: Herstellung des Polyurethan-Elastomers aus reinem Polycarpolacton bei einer Verarbeitungstemperatur von 60°C**

| Bezeichnung | Elastomer 12 |
|---|---|
| Polyol | Polyol 5 |
| ε-Caprolacton im Polyol [Gew.-%] | 100 |
| Polyol [%] | 95,6 |
| Butandiol [%] | 4 |
| Entschäumer [%] | 0,3 |
| Katalysator [%] | 0,1 |
| Shore A | 58 |
| Reissdehnung [%] | 470 |
| Zugfestigkeit [MPa] | 30 |
| Quellgrad [%] | 1,39 |

Die dargestellten Beispiele zeigen, dass die Pfropfung von Polybutadienolen mit Blöcken an Polycaprolacton die mechanischen Eigenschaften deutlich verbessern. Die Quellgrade der Polyurethan-Elastomere in Wasser sind durch die Modifikation mit Caprolacton weiterhin sehr gering.

### Beispiel 5: Herstellung von TPU 1

Für die Verarbeitung zu einem thermoplastischen Polyurethan (TPU) wurden die Polyolkomponente 13 auf 70°C und das Isocyanat auf 45°C temperiert. Die Polyolkomponente enthält neben dem Polybutadienpolyol 1,4-Butandiol als Kettenverlängerer. Als Isocyanatkomponente wurde 4,4-MDI verwendet. Ein NCO-Index von 100 wurde eingestellt.

Der Mischvorgang wurde mit einem Überkopfrührer der Fa. Heidolph bei 220 rpm durchgeführt. In einem Bottich wurde für die Polyolkomponente 1420,11 g Polyol 13 (91,27 % der Polyolkomponente) zusammen mit 124,48 g 1,4-Butandiol (8,0 % der Polyolkomponente) eingewogen und zwei Stunden lang bei 70°C gelagert. Anschließend wurden 444,06 g reines 4,4'-MDI zugebenen. Die Komponenten wurden vermischt, bis das Reaktionsgemisch 80°C erreicht hatte. Anschließend wurde die Masse in eine auf 80°C temperierte Schale aus Aluminium gegossen. Nach insgesamt 10 Minuten wurde das TPU für 15 Stunden bei 80°C getempert.

### Herstellung der Prüfkörper

Das erhaltene TPU wurde in ca. 15 x 10 cm² große Stücke geschnitten und mit flüssigem Stickstoff gekühlt. Die gekühlten Proben wurden mit einem Häcksler der Fa. Condux zu Granulat zerkleinert. Aus dem Granulat wurde mit der Babyplast (Modell 6/10) der Fa. Christmann Kunststofftechnik GmbH Prüfkörper der Größe 3 cm x 7 cm spritzgegossen (Plastifizierung 211°C, Umlenkkammer 215°C, Düse 210°C, Werkzeug 64°C). Anschließend wurden S2 Schulterstäbe gestanzt. Die mechanischen Eigenschaften sind in der Tabelle 5 zusammengefasst.

**Tabelle 5: Herstellung der TPU aus estermodifiziertem Polyol**

| Bezeichnung | TPU 1 |
|---|---|
| Polyol | Polyol 13 |
| ε-Caprolacton im Polyol [wt%] | 30 |
| Polyol [%] | 91,27 |
| Butandiol [%] | 8 |
| Shore A | 75 |
| Reissdehnung [%] | 471,7 |
| Zugfestigkeit [MPa] | 13,3 |
| Quellgrad [%] | 0,45 |

Vergleichsbeispiel 2: Herstellung eines TPUs aus einem nicht modifizierten Polybutadiendiol Ein analoges Experiment nach Beispiel 5 mit einem nicht modifizierten Polybutadiendiol, Polyol 1, führte zu einem Material mit sehr geringer Festigkeit. Das Material wurde nicht weiter verarbeitet.

### Charakterisierung

Umsätze der Doppelbindungen bei der Epoxidierung von Polybutadienen wurden per ¹H-NMR-Spektroskopie in d-Chloroform bestimmt. EP-Werte epoxidierter Polybutadiene wurden nach einer Methode von Jung und Kleeberg bestimmt [Fres. J. Anal. Chem. 1962, 387].

OH-Zahlen der Polyole wurden nach DIN 53240-2 mittels potentiometrischer Titration bestimmt. Dynamische Scher-Viskositäten wurden mit einem Rheometer AR-G2 der Fa. TA Instruments bestimmt Die Messungen erfolgten bei angegebener Temperatur im Steady State-Modus bei Scherfrequenzen zwischen 0,1 und 1000 Hz mit einer Kegel-Platte Geometrie (Durchmesser: 40 mm bzw. 60 mm, Winkel: 2°).

Schmelztemperaturen wurden mittels DSC bestimmt. Die Probe wurde von Raumtemperatur mit einer Geschwindigkeit von 20°C/min auf 150°C erhitzt. Die Temperatur wurde 3 min gehalten. Schließlich wurde die Temperatur mit einer Geschwindigkeit von 10°C/min auf -120°C abgekühlt, ehe nach einer Verweilzeit von 3 min mit 10°C/min auf 220°C erhitzt wurde. Die Schmelzpunkte wurden während der zweiten Heizphase bestimmt. Die Temperatur wurde erneut 3 min gehalten, bevor schließlich auf Raumtemperatur abgekühlt wurde.

Zugversuche erfolgten nach DIN 53504 an S2 Schulterstäben mit optischer Wegverfolgung.

Shore-Härten wurden nach DIN 53505 bestimmt.

Die Bestimmung der Wasseraufnahme erfolgte an passgenau für Diarahmen zugeschnitten PU-Platten von ca. 3 x 4 cm². Die Proben wurden fünf Stunden lang in Wasser von 100°C gestellt.

Die Proben wurden schließlich trockengetupft und aus der Massendifferenz wurde der Quellgrad berechnet.

## Patentansprüche

1. Polyurethane, erhältlich durch Umsetzung von
a) Polyisocyanaten A, ausgewählt aus gegebenenfalls modifiziertem 4,4'-Methandiphenyldiisocyanat, höherkernigen Homologen des 4,4'-Methandiphenyldiisocyanats, Isocyanatgruppen enthaltenden Prepolymeren auf Basis von 4,4'-Methandiphenyldiisocyanat und Gemischen daraus,
b) Verbindungen mit mindestens zwei mit Isocyanatgruppen reaktiven Wasserstoffatomen, enthaltend
b1) Blockcopolymere aus einem Polybutadienol und einem cyclischen Ester als Komponente B1, und
b2) Diole als niedermolekulare Kettenverlängerer und optional Triole als Vernetzer mit einem Molekulargewicht von 62 bis 500 g/mol als Komponente 82,
c) gegebenenfalls weiteren polymere Verbindungen C mit mindestens 2 gegenüber Isocyanaten reaktiven Wasserstoffatomen,
d) gegebenenfalls Katalysatoren D,
e) gegebenenfalls Wasser E,
f) gegebenenfalls physikalischen Treibmitteln F,
g) gegebenenfalls weiteren Hilfsmitteln und/oder Zusatzstoffen G.

2. Polyurethane nach Anspruch 1, **dadurch gekennzeichnet, dass** der cyclische Ester ausgewählt ist aus der Gruppe bestehend aus ε-Caprolacton, 1,6-Dioxacyclododecan-7,12-dion und Oxacyclodecan-2-on.

3. Polyurethane nach Anspruch 1 oder 2, **dadurch gekennzeichnet, dass** die Polyolkomponente B1 ein zahlenmittleres Molekulargewicht im Bereich von 600 bis 15000 g/mol, einen Anteil an ε-Caprolacton von 5 bis 75 Gew.-% und eine OH-Funktionalität von 2 bis 5 aufweist.

4. Polyurethane nach Anspruch 1 oder 2, **dadurch gekennzeichnet, dass** die Polyolkomponente B1 ein zahlenmittleres Molekulargewicht im Bereich von 600 bis 15000 g/mol, einen Anteil an ε-Caprolacton von 5 bis 75 Gew.-% und eine OH-Funktionalität von 1,5 bis 2,2 aufweist.

5. Polyurethane nach einem der Ansprüche 1 bis 4, **dadurch gekennzeichnet, dass** der Kettenverlängerer der Komponente B2 ausgewählt ist aus der Gruppe bestehend aus Ethylenglykol, 1,2-Propandiol, 1,3-Propandiol, 2-Methyl-1,3-propandiol, 1,4-Butadiol, Diethylenglykol und Dipropylenglykol.

6. Polyurethane nach Anspruch 5, **dadurch gekennzeichnet, dass** der Vernetzer der Komponente B2 ausgewählt ist aus der Gruppe bestehend aus ethoxyliertem und/oder propoxyliertem Glycerin und Trimethylolpropan.

7. Polyurethane nach einem der Ansprüche 1 bis 6, erhältlich durch Umsetzung von
a) 10 bis 300 Gew.-Teilen, bevorzugt 30 bis 150 Gew.-Teilen Polyisocyanate A,
b1) 100 Gew.-Teilen Komponente B1,
b2) 2 bis 20 Gew.-Teilen, bevorzugt 4 bis 15 Gew.-Teilen niedermolekularer Kettenverlängerer oder Vernetzer mit einem Molekulargewicht von 62 bis 500 g/mol als Komponente B2,
c) 0 bis 100 Gew.-Teilen weiterer polymerer Verbindungen C mit mindestens 2 gegenüber Isocyanaten reaktiven Wasserstoffatomen,
d) 0 bis 5 Gew.-Teilen Katalysatoren D,
e) 0 bis 3 Gew.-Teilen Wasser E,
f) 0 bis 10 Gew.-Teilen physikalischer Treibmittel F,
g) 0 bis 100 Gew.-Teilen Hilfsmittel und/oder Zusatzstoffe G.

8. Polyurethane nach einem der Ansprüche 1 bis 7, **dadurch gekennzeichnet, dass** das Polyisocyanat A ausgewählt ist aus der Gruppe bestehend aus Diphenylmethandiisocyanat (MDI) und Gemischen aus MDI und Polyphenylenmethylenpolyisocyanaten (Roh-MD1).

9. Polyolkomponente enthaltend
b1) 100 Gew.-Teile Blockcopolymere bestehend aus einem Polybutadienol und einem cyclischen Ester als Komponente B1 und
b2) 2 bis 20 Gew.-Teile niedermolekulare Kettenverlängerer oder Vernetzer mit einem Molekulargewicht von 62 bis 500 g/mol als Komponente B2.

10. Polyolkomponente nach Anspruch 9, **dadurch gekennzeichnet, dass** die Komponente B1 ein zahlenmittleres Molekulargewicht im Bereich von 600 bis 15000 g/mol, einen Anteil an ε-Caprolacton von 5 bis 75 Gew.-% und eine OH-Funktionalität von 2 bis 5 aufweist.

11. Polyolkomponente nach Anspruch 9, **dadurch gekennzeichnet, dass** die Komponente B1 ein zahlenmittleres Molekulargewicht im Bereich von 600 bis 15000 g/mol, einen Anteil an ε-Caprolacton von 5 bis 75 Gew.-% und eine OH-Funktionalität von 1,5 bis 2,2 aufweist.

12. Polyolkomponente nach einem der Ansprüche 9 bis 11, **dadurch gekennzeichnet, dass** der Kettenverlängerer der Komponente B2 ausgewählt ist aus der Gruppe bestehend aus Ethylenglykol, 1,2-Propandiol, 1,3-Propandiol, 2-Methyl-1,3-propandiol, 1,4-Butadiol, Diethylenglykol und Dipropylenglykol.

13. Verwendung einer Polyolkomponente enthaltend Blockcopolymere bestehend aus einem Polybutadienol und einem cyclischen Ester als Komponente B1 und niedermolekulare Kettenverlängerer oder Vernetzer mit einem Molekulargewicht von 62 bis 500 g/mol als Komponente B2 zur Herstellung von Polyurethanen.

14. Verwendung nach Anspruch 13 zur Herstellung von Polyurethan-Elastomeren.

15. Verwendung nach Anspruch 14 zur Herstellung von nicht-geschäumten Polyurethan-Elastomeren mit einer Dichte von größer 1000 kg/m³.

16. Verwendung nach Anspruch 14 zur Herstellung von Polyurethanelastomer-Schäumen mit einer Dichte von 100 bis 1000 kg/m³.

17. Verwendung nach Anspruch 13 zur Herstellung von thermoplastischen Polyurethanen.

## Claims

1. A polyurethane obtainable by reaction of
a) polyisocyanates A selected from optionally modified 4,4'-methanediphenyl diisocyanate, higher-nuclear homologs of 4,4'-methanediphenyl diisocynate, prepolymers comprising isocyanate groups and based on 4,4'-methanediphenyl diisocyanate and mixtures thereof,
b) compounds having at least two isocyanate-reactive hydrogen atoms, comprising
b1) block copolymers formed from a polybutadienol and a cyclic ester as component B1, and
b2) diols as low molecular weight extenders and optionally triols as crosslinkers having a molecular weight of 62 to 500 g/mol as component B2,
c) optionally further polymeric compounds C having at least 2 isocyanate-reactive hydrogen atoms,
d) optionally catalysts D,
e) optionally water E,
f) optionally physical blowing agents F,
g) optionally further auxiliaries and/or added-substance materials G.

2. The polyurethane according to claim 1, wherein the cyclic ester is selected from the group consisting of ε-caprolactone, 1,6-dioxacyclododecane-7,12-dione and oxacyclodecan-2-one.

3. The polyurethane according to claim 1 or 2, wherein the polyol component B1 has a number average molecular weight in the range from 600 to 15 000 g/mol, an ε-caprolactone fraction of 5 to 75 wt% and an OH functionality of 2 to 5.

4. The polyurethane according to claim 1 or 2, wherein the polyol component B1 has a number average molecular weight in the range from 600 to 15 000 g/mol, an ε-caprolactone fraction of 5 to 75 wt% and an OH functionality of 1.5 to 2.2.

5. The polyurethane according to any of claims 1 to 4, wherein the extender of component B2 is selected from the group consisting of ethylene glycol, 1,2-propanediol, 1,3-propanediol, 2-methyl-1,3-propanediol, 1,4-butanediol, diethylene glycol and dipropylene glycol.

6. The polyurethane according to claim 5, wherein the crosslinker of component B2 is selected from the group consisting of ethoxylated and/or propoxylated glycerol and trimethylolpropane.

7. The polyurethane according to any of claims 1 to 6, obtainable by reaction of
a) 10 to 300 parts by weight, preferably 30 to 150 parts by weight of polyisocyanates A,
b1) 100 parts by weight of component B1,
b2) 2 to 20 parts by weight, preferably 4 to 15 parts by weight of low molecular weight extenders or crosslinkers having a molecular weight of 62 to 500 g/mol as component B2,
c) 0 to 100 parts by weight of further polymeric compounds C having at least 2 isocyanate-reactive hydrogen atoms,
d) 0 to 5 parts by weight of catalysts D,
e) 0 to 3 parts by weight of water E,
f) 0 to 10 parts by weight of physical blowing agents F,
g) 0 to 100 parts by weight of auxiliaries and/or added-substance materials G.

8. The polyurethane according to any of claims 1 to 7, wherein the polyisocyanate A is selected from the group consisting of diphenylmethane diisocyanate (MDI) and mixtures of MDI and polyphenylene methylene polyisocyanates (crude MDI).

9. A polyol component comprising
b1) 100 parts by weight of block copolymers consisting of a polybutadienol and a cyclic ester as component B1, and
b2) 2 to 20 parts by weight of low molecular weight extenders or crosslinkers having a molecular weight of 62 to 500 g/mol as component B2.

10. The polyol component according to claim 9, wherein component B1 has a number average molecular weight in the range from 600 to 15 000 g/mol, an ε-caprolactone fraction of 5 to 75 wt% and an OH functionality of 2 to 5.

11. The polyol component according to claim 9, wherein component B1 has a number average molecular weight in the range from 600 to 15 000 g/mol, an ε-caprolactone fraction of 5 to 75 wt% and an OH functionality of 1.5 to 2.2.

12. The polyol component according to any of claims 9 to 11, wherein the extender of component B2 is selected from the group consisting of ethylene glycol, 1,2-propanediol, 1,3-propanediol, 2-methyl-1,3-propanediol, 1,4-butanediol, diethylene glycol and dipropylene glycol.

13. A method of using a polyol component comprising block copolymers consisting of a polybutadienol and a cyclic ester as component B1 and low molecular weight extenders or crosslinkers having a molecular weight of 62 to 500 g/mol as component B2 for producing polyurethanes.

14. The method according to claim 13 for producing compact elastomers.

15. The method according to claim 14 for producing compact polyurethane elastomers having a density of above 1000 kg/m³.

16. The method according to claim 14 for producing cellular polyurethane elastomers having a density in the range from 100 to 1000 kg/m³.

17. The method according to claim 13 for producing thermoplastic polyurethanes.

## Revendications

1. Polyuréthanes, pouvant être obtenus par la mise en réaction de
a) des polyisocyanates A, choisis parmi le diisocyanate de 4,4'-diphénylméthane éventuellement modifié, les homologues à nombre de noyaux supérieur du diisocyanate de 4,4'-diphénylméthane, les prépolymères contenant des groupes isocyanate à base de diisocyanate de 4,4'-diphénylméthane et leurs mélanges,
b) des composés contenant au moins deux atomes d'hydrogène réactifs avec les groupes isocyanate, contenant
b1) des copolymères séquencés d'un polybutadiénol et d'un ester cyclique en tant que composant B1, et
b2) des diols en tant qu'allongeurs de chaînes de faible poids moléculaire et éventuellement des triols en tant qu'agents de réticulation ayant un poids moléculaire de 62 à 500 g/mol en tant que composant B2,
c) éventuellement d'autres composés polymères C contenant au moins 2 atomes d'hydrogène réactifs avec les isocyanates,
d) éventuellement des catalyseurs D,
e) éventuellement de l'eau E,
f) éventuellement des agents gonflants physiques F,
g) éventuellement d'autres adjuvants et/ou additifs G.

2. Polyuréthanes selon la revendication 1, **caractérisés en ce que** l'ester cyclique est choisi dans le groupe constitué par l'ε-caprolactone, la 1,6-dioxacyclododécane-7,12-dione et l'oxacyclodécan-2-one.

3. Polyuréthanes selon la revendication 1 ou 2, **caractérisés en ce que** le composant polyol B1 présente un poids moléculaire moyen en nombre dans la plage allant de 600 à 15 000 g/mol, une proportion d'ε-caprolactone de 5 à 75 % en poids et une fonctionnalité OH de 2 à 5.

4. Polyuréthanes selon la revendication 1 ou 2, **caractérisés en ce que** le composant polyol B1 présente un poids moléculaire moyen en nombre dans la plage allant de 600 à 15 000 g/mol, une proportion d'ε-caprolactone de 5 à 75 % en poids et une fonctionnalité OH de 1,5 à 2,2.

5. Polyuréthanes selon l'une quelconque des revendications 1 à 4, **caractérisés en ce que** l'allongeur de chaînes du composant B2 est choisi dans le groupe constitué par l'éthylène glycol, le 1,2-propanediol, le 1,3-propanediol, le 2-méthyl-l,3-propanediol, le 1,4-butanediol, le diéthylène glycol et le dipropylène glycol.

6. Polyuréthanes selon la revendication 5, **caractérisés en ce que** l'agent de réticulation du composant B2 est choisi dans le groupe constitué par la glycérine éthoxylée et/ou propoxylée et le triméthylolpropane.

7. Polyuréthanes selon l'une quelconque des revendications 1 à 6, pouvant être obtenus par mise en réaction de
a) 10 à 300 parties en poids, de préférence 30 à 150 parties en poids, de polyisocyanates A,
b1) 100 parties en poids du composant B1,
b2) 2 à 20 parties en poids, de préférence 4 à 15 parties en poids, d'allongeurs de chaînes de faible poids moléculaire ou d'agents de réticulation ayant un poids moléculaire de 62 à 500 g/mol en tant que composant B2,
c) 0 à 100 parties en poids d'autres composés polymères C contenant au moins 2 atomes d'hydrogène réactifs avec les isocyanates,
d) 0 à 5 parties en poids de catalyseurs D,
e) 0 à 3 parties en poids d'eau E,
f) 0 à 10 parties en poids d'agents gonflants physiques F,
g) 0 à 100 parties en poids d'adjuvants et/ou d'additifs G.

8. Polyuréthanes selon l'une quelconque des revendications 1 à 7, **caractérisés en ce que** le polyisocyanate A est choisi dans le groupe constitué par le diisocyanate de diphénylméthane (MDI) et les mélanges de MDI et de polyisocyanates de polyphénylène-méthylène (MDI brut).

9. Composant polyol, contenant :
b1) 100 parties en poids de copolymères séquencés constitués par un polybutadiénol et un ester cyclique en tant que composant B1 et
b2) 2 à 20 parties en poids d'allongeurs de chaînes de faible poids moléculaire ou d'agents de réticulation ayant un poids moléculaire de 62 à 500 g/mol en tant que composant B2.

10. Composant polyol selon la revendication 9, **caractérisé en ce que** le composant B1 présente un poids moléculaire moyen en nombre dans la plage allant de 600 à 15 000 g/mol, une proportion d's-caprolactone de 5 à 75 % en poids et une fonctionnalité OH de 2 à 5.

11. Composant polyol selon la revendication 9, **caractérisé en ce que** le composant B1 présente un poids moléculaire moyen en nombre dans la plage allant de 600 à 15 000 g/mol, une proportion d'ε-caprolactone de 5 à 75 % en poids et une fonctionnalité OH de 1,5 à 2,2.

12. Composant polyol selon l'une quelconque des revendications 9 à 11, **caractérisé en ce que** l'allongeur de chaînes du composant B2 est choisi dans le groupe constitué par l'éthylène glycol, le 1,2-propanediol, le 1,3-propanediol, le 2-méthyl-1,3-propanediol, le 1,4-butanediol, le diéthylène glycol et le dipropylène glycol.

13. Utilisation d'un composant polyol contenant des copolymères séquencés constitués par un polybutadiénol et un ester cyclique en tant que composant B1 et des allongeurs de chaînes de faible poids moléculaire ou des agents de réticulation ayant un poids moléculaire de 62 à 500 g/mol en tant que composant B2 pour la fabrication de polyuréthanes.

14. Utilisation selon la revendication 13 pour la fabrication d'élastomères de polyuréthane.

15. Utilisation selon la revendication 14 pour la fabrication d'élastomères de polyuréthane non moussés ayant une densité supérieure à 1 000 kg/m³.

16. Utilisation selon la revendication 14 pour la fabrication de mousses d'élastomères de polyuréthane ayant une densité de 100 à 1 000 kg/m³.

17. Utilisation selon la revendication 13 pour la fabrication de polyuréthanes thermoplastiques.
